# EUROPEAN PATENT APPLICATION

(11) **EP 4 215 047 A1**
(43) Date of publication of application: **26.07.2023**
(21) Application number: 23152499.2
(22) Date of filing: 19.01.2023
(51) Int. Cl.: A01N 53/00, A01P 7/04

(54) **A METHOD OF CONTROLLING PEST**

(30) Priority: 21.01.2022 EP 22382040
(71) Applicant: UPL Corporation Limited, Port Louis (MU); UPL Europe Ltd, Warrington, Cheshire WA3 6YN (GB)
(72) Inventor: LÓPEZ, David Roldán, 41728 Sevilla (ES); TELLO, Angel Rodríguez, 41728 Sevilla (ES)
(74) Representative: J A Kemp LLP

(57) **Abstract**

The present invention discloses a method of controlling Hessian fly and controlling or preventing damage caused by the fly at a target locus, preferably cereal crops by contacting the Hessian fly or a target locus with deltamethrin or a composition comprising deltamethrin.

## Description

### Field of invention:

The present invention relates to a method of controlling a pest comprising contacting the pest with an insecticidal compound. More particularly, the present invention relates to a method of controlling a cereal pest using a pyrethroid insecticide.

### Background:

The Hessian fly *Mayetiola destructor* (Diptera: Cecidomyiidae) is a major pest of wheat, and other cereals globally. Also known as barley midge, its larvae feed on young plants which stunts growth and cause the central shoots to yellow and die. Severe infestations at this stage may kill plants, resulting in gaps in the crop. At later stages of crop growth, the developing stems are weakened by larvae feeding at the nodes. This results in withering and lodging, which causes loss of yield since the earheads fail to develop. Any grain developing in affected heads tends to be of poor quality. When larvae feed on wheat seedlings, the shoots they are directly feeding on eventually die and produce no grain.

The pest also causes much damage to barley and rye. Severe infestations have caused crop shortages with wheat yield losses in North Africa estimated at about 40%.

It is thus a need of the hour to develop better solutions for control of the *Mayetiola destructor* and prevent crop damage and losses.

### Objective:

It is an object of the present invention to provide a solution for preventing damage to cereal crops, particularly wheat, barley and rye.

It is an object of the present invention to provide a solution for controlling the pest *Mayetiola destructor.*

It is also an object of the present invention to provide a product having better control of the pest *Mayetiola destructor.*

### Summary:

In accordance with the object of the present invention, an aspect of the present invention provides a method of controlling *Mayetiola destructor* comprising contacting *Mayetiola destructor* with deltamethrin or a composition comprising deltamethrin.

An aspect of the present invention provides a method of controlling *Mayetiola destructor* comprising applying deltamethrin to a target locus where control is desired. The application of deltamethrin or a composition comprising deltamethrin at a target locus prevents or controls damage by *Mayetiola destructor* to the target locus. In an embodiment, the target locus is a crop or a part thereof, preferably a cereal crop. Non-limiting examples of a crop are wheat, maize, rice, barley, oats, rye, and sorghum.

According to an aspect of the present invention, there is provided a method of preventing or controlling damage by *Mayetiola destructor* to a target locus, preferably cereal crops, comprising applying deltamethrin to the target locus.

According to another aspect, the present invention provides a composition comprising deltamethrin for prevention or control of *Mayetiola destructor.* The invention, therefore, provides a composition for preventing or controlling the damage caused by *Mayetiola destructor* to a target locus, preferably cereal crops, to which the composition is applied. The composition of the present invention is used for foliar application, ground application, or application to plant propagation materials.

According to yet another aspect, the present invention also provides a use of deltamethrin in prevention and control of *Mayetiola destructor.* The invention provides a use of deltamethrin in prevention and control of damage caused by *Mayetiola destructor* to cereal crops.

### Detailed description of embodiments:

For the purposes of the following detailed description, it is to be understood that the invention may assume various alternative variations and step sequences, except where expressly specified to the contrary. Moreover, other than in any operating examples, or where otherwise indicated, all numbers expressing, for example, quantities of materials/ingredients used in the specification are to be understood as being modified in all instances by the term "about".

Thus, before describing the present invention in detail, it is to be understood that this invention is not limited to particularly exemplified systems or process parameters that may of course, vary. It is also to be understood that the terminology used herein is for the purpose of describing particular embodiments of the invention only and is not intended to limit the scope of the invention in any manner. The use of examples anywhere in this specification including examples of any terms discussed herein is illustrative only, and in no way limits the scope and meaning of the invention or of any exemplified term. Likewise, the invention is not limited to various embodiments given in this specification. Unless otherwise defined, all technical and scientific terms used herein have the same meaning as commonly understood by one of ordinary skill in the art to which this invention pertains. In the case of conflict, the present document, including definitions will control.

It must be noted that, as used in this specification, the singular forms "a," "an" and "the" include plural referents unless the content clearly dictates otherwise. The terms "preferred" and "preferably" refer to embodiments of the invention that may afford certain benefits, under certain circumstances.

As used herein, the terms "comprising" "including," "having," "containing," "involving," and the like are to be understood to be open-ended, i.e., to mean including but not limited to.

The inventors of the present invention unexpectedly and surprisingly found that deltamethrin, when applied to the pest *Mayetiola destructor,* was able to exert better control of the pest and prevent damage to the crops. More surprisingly, it was found that deltamethrin was unexpectedly more efficacious than other synthetic pyrethroids towards the control of the pest *Mayetiola destructor.*

Thus, in an embodiment of the present invention, there is provided a method of controlling *Mayetiola destructor* comprising contacting *Mayetiola destructor* with deltamethrin.

In an embodiment of the present invention, there is provided a method of controlling *Mayetiola destructor* comprising contacting *Mayetiola destructor* with a composition comprising deltamethrin.

In an embodiment of the present invention, there is provided a method of controlling *Mayetiola destructor* comprising contacting *Mayetiola destructor* with deltamethrin or a composition comprising deltamethrin.

In an embodiment, the said method comprises applying deltamethrin or a composition comprising deltamethrin to a target locus.

In a preferred embodiment, the target locus is a crop or a part thereof, preferably a cereal crop. In another preferred embodiment, the cereal crop is selected from wheat, maize, rice, barley, oats, rye, millet, triticale, fonio, quinoa and sorghum.

In an embodiment, deltamethrin may be applied by means of soil drench, foliar, systemic, topical, direct and residual sprays, aerial sprays, gels, seed coatings, microencapsulations, systemic uptake, baits, eartags, boluses, foggers, fumigants, aerosols, dusts, The compounds of this invention may also be impregnated into materials for fabricating invertebrate control devices (e.g., insect netting).

In a yet another embodiment, deltamethrin is applied in pesticidally effective amounts.

In an embodiment, the active substance (deltamethrin) is applied at a dose rate of 1 g or ml/ha to 1000 g or ml/ha.

In a preferred embodiment, deltamethrin is applied at a dose rate of 50 g or ml/ha to 950 g or ml/ha.

In a preferred embodiment, deltamethrin is applied at a dose rate of 100 g or ml/ha to 900 g or ml/ha.

In a preferred embodiment, deltamethrin is applied at a dose rate of 150 g or ml/ha to 850 g or ml/ha.

In a preferred embodiment, deltamethrin is applied at a dose rate of 200 g or ml/ha to 800 g or ml/ha.

In a preferred embodiment, deltamethrin is applied at a dose rate of 250 g or ml/ha to 750 g or ml/ha.

In a preferred embodiment, deltamethrin is applied at a dose rate of 300 g or ml/ha to 700 g or ml/ha.

In a preferred embodiment, deltamethrin is applied at a dose rate of 350 g or ml/ha to 650 g or ml/ha.

In a preferred embodiment, deltamethrin is applied at a dose rate of 400 g or ml/ha to 600 g or ml/ha.

In a preferred embodiment, deltamethrin is applied at a dose rate of 450 g or ml/ha to 550 g or ml/ha.

In a preferred embodiment, deltamethrin is applied at a dose rate of 500 g or ml/ha.

In an embodiment, there is provided an insecticidal composition comprising deltamethrin for the control of *Mayetiola destructor.*

In an embodiment, there is provided an insecticidal composition comprising deltamethrin for the control of *Mayetiola destructor* in cereal crops.

In an embodiment, there is provided an insecticidal composition comprising deltamethrin for the control or prevention of crop damage caused by *Mayetiola destructor.*

In a preferred embodiment, the present invention provides an insecticidal composition comprising deltamethrin for control or prevention of crop damage caused by *Mayetiola destructor* in cereal crops such as wheat, rye and barley.

In an embodiment, the insecticidal composition of the present disclosure may be a premixed formulation of deltamethrin with agrochemically suitable excipients.

The agrochemically suitable excipient may be any one or a combination of adjuvants, cosolvents, surfactants, colorants, dispersants, emulsifiers, thickeners, antifreeze agents, biocides, anti-foam agents, stabilizers, wetting agents or a mixture thereof which may be optionally added to the compositions of the present invention.

The surfactants may be selected from non-ionic, anionic or cationic surfactants.

Examples of nonionic surfactants include polyarylphenol polyethoxy ethers, polyalkylphenol polyethoxy ethers, polyglycol ether derivatives of saturated fatty acids, polyglycol ether derivatives of unsaturated fatty acids, polyglycol ether derivatives of aliphatic alcohols, polyglycol ether derivatives of cycloaliphatic alcohols, fatty acid esters of polyoxyethylene sorbitan, alkoxylated vegetable oils, alkoxylated acetylenic diols, polyalkoxylated alkylphenols, fatty acid alkoxylates, sorbitan alkoxylates, sorbitol esters, C₈-C₂₂ alkyl or alkenyl polyglycosides, polyalkoxy styrylaryl ethers, alkylamine oxides, block copolymer ethers, polyalkoxylated fatty glyceride, polyalkylene glycol ethers, linear aliphatic or aromatic polyesters, organo silicones, polyaryl phenols, sorbitol ester alkoxylates, polyalkylene oxide block copolymers, acrylic copolymers and mono- and diesters of ethylene glycol and mixtures thereof.

Examples of anionic surfactants include alcohol sulfates, alcohol ether sulfates, alkylaryl ether sulfates, alkylaryl sulfonates such as alkylbenzene sulfonates and alkylnaphthalene sulfonates and salts thereof, alkyl sulfonates, mono- or di-phosphate esters of polyalkoxylated alkyl alcohols or alkylphenols , mono- or di-sulfosuccinate esters of C₁₂-C₁₅ alkanols or polyalkoxylated C₁₂-C₁₅ alkanols, alcohol ether carboxylates, phenolic ether carboxylates, polybasic acid esters of ethoxylated polyoxyalkylene glycols consisting of oxybutylene or the residue of tetrahydrofuran, sulfoalkylamides and salts thereof such as N-methyl-N-oleoyltaurate Na salt, polyoxyalkylene alkylphenol carboxylates, polyoxyalkylene alcohol carboxylates alkyl polyglycoside/alkenyl succinic anhydride condensation products, alkyl ester sulfates, napthalene sulfonates, naphthalene formaldehyde condensates, alkyl sulfonamides, sulfonated aliphatic polyesters, sulfate esters of styrylphenyl alkoxylates, and sulfonate esters of styrylphenyl alkoxylates and their corresponding sodium, potassium, calcium, magnesium, zinc, ammonium, alkylammonium, diethanolammonium, or triethanolammonium salts, salts of ligninsulfonic acid such as the sodium, potassium, magnesium, calcium or ammonium salt, polyarylphenol polyalkoxyether sulfates and polyarylphenol polyalkoxyether phosphates, and sulfated alkyl phenol ethoxylates and phosphated alkyl phenol ethoxylates.

Cationic surfactants include alkanol amides of C₈-C₁₈ fatty acids and C₈-C₁₈ fatty amine polyalkoxylates, C₁₀-C₁₈ alkyldimethylbenzylammonium chlorides, coconut alkyldimethylaminoacetic acids, and phosphate esters of C₈-C₁₈ fatty amine polyalkoxylates.

Emulsifiers which can be advantageously employed herein can be readily determined by those skilled in the art and include various non-ionic, anionic, cationic and amphoteric emulsifiers, or a blend of two or more emulsifiers. Examples of nonionic emulsifiers useful in preparing the emulsifiable concentrates include the polyalkylene glycol ethers and condensation products of alkyl and aryl phenols, aliphatic alcohols, aliphatic amines or fatty acids with ethylene oxide, propylene oxides such as the ethoxylated alkyl phenols and carboxylic esters solubilized with the polyol or polyoxyalkylene. Cationic emulsifiers include quaternary ammonium compounds and fatty amine salts. Anionic emulsifiers include the oil-soluble salts (e.g., calcium) of alkylaryl sulfonic acids, oil-soluble salts or sulfated polyglycol ethers and appropriate salts of phosphated polyglycol ether.

In an embodiment, colorants may be selected from iron oxide, titanium oxide and Prussian Blue, and organic dyestuffs, such as alizarin dyestuffs, azo dyestuffs or metal phthalocyanine dyestuffs, and trace elements, such as salts of iron, manganese, boron, copper, cobalt, molybdenum and zinc.

Another embodiment involves addition of a thickener or binder which may be selected from but not limited to molasses, granulated sugar, alginates, karaya gum, jaguar gum, tragacanth gum, polysaccharide gum, mucilage, xanthan gum or combination thereof. In another embodiment, the binder may be selected from silicates such as magnesium aluminium silicate, polyvinyl acetates, polyvinyl acetate copolymers, polyvinyl alcohols, polyvinyl alcohol copolymers, celluloses, including ethylcelluloses and methylcelluloses, hydroxymethyl celluloses, hydroxypropylcelluloses, hydroxymethylpropyl-celluloses, polyvinylpyrolidones, dextrins, malto-dextrins, polysaccharides, fats, oils, proteins, gum arabics, shellacs, vinylidene chloride, vinylidene chloride copolymers, calcium lignosulfonates, acrylic copolymers, starches, polyvinylacrylates, zeins, gelatin, carboxymethylcellulose, chitosan, polyethylene oxide, acrylimide polymers and copolymers, polyhydroxyethyl acrylate, methylacrylimide monomers, alginate, ethylcellulose, polychloroprene and syrups or mixtures thereof; polymers and copolymers of vinyl acetate, methyl cellulose, vinylidene chloride, acrylic, cellulose, polyvinylpyrrolidone and polysaccharide; polymers and copolymers of vinylidene chloride and vinyl acetate-ethylene copolymers; combinations of polyvinyl alcohol and sucrose; plasticizers such as glycerol, propylene glycol, polyglycols.

In another embodiment, antifreeze agent(s) added to the composition may be alcohols selected from the group comprising of but not limited to ethylene glycol, 1,2-propylene glycol, 1,3-propylene glycol, 1,2-butanediol, 1,3-butanediol, 1,4-butanediol, 1,4-pentanediol, 3-methyl-1,5-pentanediol, 2,3-dimethyl-2,3-butanediol, trimethylol propane, mannitol, sorbitol, glycerol, pentaerythritol, 1,4-cyclohexanedimethanol, xylenol, bisphenols such as bisphenol A or the like. In addition, ether alcohols such as diethylene glycol, triethylene glycol, tetraethylene glycol, polyoxyethylene or polyoxypropylene glycols of molecular weight up to about 4000, diethylene glycol monomethylether, diethylene glycol monoethylether, triethylene glycol monomethylether, butoxyethanol, butylene glycol monobutylether, dipentaerythritol, tripentaerythritol, tetrapentaerythritol, diglycerol, triglycerol, tetraglycerol, pentaglycerol, hexaglycerol, heptaglycerol, octaglycerol.

According to an embodiment, biocides may be selected from benzothiazoles, 1,2-benzisothiazolin-3-one, sodium dichloro-s-triazinetrione, sodium benzoate, potassium sorbate, 1,2-phenyl-isothiazolin-3-one, inter chloroxylenol paraoxybenzoate butyl.

According to an embodiment, antifoam agent may be selected from Polydimethoxysiloxane, polydimethylsiloxane, Alkyl poly acrylates, Castor Oil, Fatty Acids, Fatty Acids Esters, Fatty Acids Sulfate, Fatty Alcohol, Fatty Alcohol Esters, Fatty Alcohol Sulfate, Foot Olive Oil, Mono & Di Glyceride, Paraffin Oil, Paraffin Wax, Poly Propylene Glycol, Silicones Oil, Vegetable Fats, Vegetable Fats Sulfate, Vegetable Oil, Vegetable Oil Sulfate, Vegetable Wax, Vegetable Wax Sulfate, agents based on silicon or magnesium stearate.

The additives to be used for the formulation include, for example, a solid carrier such as kaolinite, sericite, diatomaceous earth, slaked lime, calcium carbonate, talc, white carbon, kaoline, bentonite, clay, sodium carbonate, sodium bicarbonate, mirabilite, zeolite or starch; a solvent such as water, toluene, xylene, solvent naphtha, dioxane, dimethylsulfoxide, N,N-dimethylformamide, dimethylacetamide, N-methyl-2-pyrrolidone or an alcohol; an anionic surfactant such as a salt of fatty acid, a benzoate, a polycarboxylate, a salt of alkylsulfuric acid ester, an alkyl sulfate, an alkylaryl sulfate, an alkyl diglycol ether sulfate, a salt of alcohol sulfuric acid ester, an alkyl sulfonate, an alkylaryl sulfonate, an aryl sulfonate, a lignin sulfonate, an alkyldiphenylether disulfonate, a polystyrene sulfonate, a salt of alkylphosphoric acid ester, an alkylaryl phosphate, a styrylaryl phosphate, a salt of polyoxyethylene alkyl ether sulfuric acid ester, a polyoxyethylene alkylaryl ether sulfate, a salt of polyoxyethylene alkylaryl ether sulfuric acid ester, a polyoxyethylene alkyl ether phosphate, a salt of polyoxyethylene alkylaryl phosphoric acid ester, a salt of polyoxyethylene aryl ether phosphoric acid ester, a naphthalene sulfonic acid condensed with formaldehyde or a salt of alkylnaphthalene sulfonic acid condensed with formaldehyde; a nonionic surfactant such as a sorbitan fatty acid ester, a glycerin fatty acid ester, a fatty acid polyglyceride, a fatty acid alcohol polyglycol ether, acetylene glycol, acetylene alcohol, an oxyalkylene block polymer, a polyoxyethylene alkyl ether, a polyoxyethylene alkylaryl ether, a polyoxyethylene styrylaryl ether, a polyoxyethylene glycol alkyl ether, polyethylene glycol, a polyoxyethylene fatty acid ester, a polyoxyethylene sorbitan fatty acid ester, a polyoxyethylene glycerin fatty acid ester, a polyoxyethylene hydrogenated castor oil or a polyoxypropylene fatty acid ester; and a vegetable oil or mineral oil such as olive oil, kapok oil, castor oil, palm oil, camellia oil, coconut oil, sesame oil, corn oil, rice bran oil, peanut oil, cottonseed oil, soybean oil, rapeseed oil, linseed oil, tung oil or liquid paraffins. These additives may suitably be selected for use alone or in combination as a mixture of two or more of them, so long as the object of the present invention is met. Further, additives other than the above-mentioned may be suitably selected for use among those known in this field. For example, various additives commonly used, such as a filler, a thickener, an anti-settling agent, an anti-freezing agent, a dispersion stabilizer, a safener, an anti-mold agent, a bubble agent, a disintegrator and a binder, may be used.

The agrochemical formulation may also comprise one or more antioxidants. Preferably, the agrochemical formulation comprises an antioxidant. Antioxidants are, for example, amino acids (e.g. glycine, histidine, tyrosine, tryptophan) and derivatives thereof, imidazole and imidazole derivatives (e.g. urocanic acid), peptides, such as, for example, D,L-carnosine, D-carnosine, L-carnosine and derivatives thereof (e.g. anserine), carotenoids, carotenes (e.g. α-carotene, β-carotene, lycopene) and derivatives thereof, lipoic acid and derivatives thereof (e.g. dihydrolipoic acid), aurothioglucose, propylthiouracil and further thio compounds (e.g. thioglycerol, thiosorbitol, thioglycolic acid, thioredoxin, glutathione, cysteine, cystine, cystamine and the glycosyl, N-acetyl, methyl, ethyl, propyl, amyl, butyl, lauryl, palmitoyl, oleyl, γ-linoleyl, cholesteryl and glyceryl esters thereof), and salts thereof, dilauryl thiodipropionate, distearyl thiodipropionate, thiodipropionic acid and derivatives thereof (esters, ethers, peptides, lipids, nucleotides, nucleosides and salts), and sulfoximine compounds (e.g. buthionine sulfoximines, homocysteine sulfoximine, buthionine sulfones, penta-, hexa-, heptathionine sulfoximine) in very low tolerated doses (e.g. pmol/kg to pmol/kg), also metal chelating agents (e.g. α-hydroxy fatty acids, EDTA, EGTA, phytic acid, lactoferrin), α-hydroxy acids (e.g. citric acid, lactic acid, malic acid), humic acids, bile acid, bile extracts, gallic esters (e.g. propyl, octyl and dodecyl gallate), flavonoids, catechins, bilirubin, biliverdin and derivatives thereof, unsaturated fatty acids and derivatives thereof (e.g. γ-linolenic acid, linoleic acid, arachidonic acid, oleic acid), folic acid and derivatives thereof, hydroquinone and derivatives thereof (e.g. arbutin), ubiquinone and ubiquinol, and derivatives thereof, vitamin C and derivatives thereof (e.g. ascorbyl palmitate, stearate, dipalmitate, acetate, Mg ascorbyl phosphates, sodium and magnesium ascorbate, disodium ascorbyl phosphate and sulfate, potassium ascorbyl tocopheryl phosphate, chitosan ascorbate), isoascorbic acid and derivatives thereof, tocopherols and derivatives thereof (e.g. tocopheryl acetate, linoleate, oleate and succinate, tocophereth-5, tocophereth-10, tocophereth-12, tocophereth-18, tocophereth-50, tocophersolan), vitamin A and derivatives (e.g. vitamin A palmitate), the coniferyl benzoate of benzoin resin, rutin, rutinic acid and derivatives thereof, disodium rutinyl disulfate, cinnamic acid and derivatives thereof (e.g. ferulic acid, ethyl ferulate, caffeeic acid), kojic acid, chitosan glycolate and salicylate, butylhydroxytoluene, butylhydroxyanisol, nordihydroguaiacic acid, nordihydroguaiaretic acid, trihydroxybutyrophenone, uric acid and derivatives thereof, mannose and derivatives thereof, selenium and selenium derivatives (e.g. selenomethionine), stilbenes and stilbene derivatives (e.g. stilbene oxide, trans-stilbene oxide). According to the invention, suitable derivatives (salts, esters, sugars, nucleotides, nucleosides, peptides and lipids) and mixtures of these specified active ingredients or plant extracts (e.g. teatree oil, rosemary extract and rosemarinic acid) which comprise these antioxidants can be used. In general, mixtures of the aforementioned antioxidants are possible.

According to an embodiment, examples of suitable solvents are water, aromatic solvents (for example, xylene), paraffins (for example mineral oil fractions such as kerosene or diesel oil), coal tar oils and oils of vegetable or animal origin, aliphatic, cyclic and aromatic hydrocarbons, for example toluene, xylene, paraffin, tetrahydronaphthalene, alkylated naphthalenes or their derivatives, alcohols (for example methanol, butanol, pentanol, benzyl alcohol, cyclohexanol), ketones (for example cyclohexanone, gamma-butyrolactone), pyrrolidones (NMP, NEP, NOP), acetates (glycol diacetate), glycols, fatty acid dimethylamides, fatty acids and fatty acid esters, isophorone and dimethylsulfoxide. In principle, solvent mixtures may also be used.

According to an embodiment, suitable surfactants are alkali metal, alkaline earth metal and ammonium salts of lignosulfonic acid, naphthalenesulfonates, phenolsulfonic acid, dibutylnaphthalenesulfonic acid, alkylarylsulfonates, alkyl sulfates, alkylsulfonates, fatty alcohol sulfates, fatty acids and sulfated fatty alcohol glycol ethers, furthermore condensates of sulfonated naphthalene and naphthalene derivatives with formaldehyde, condensates of naphthalene or of naphthalenesulfonic acid with phenol and formaldehyde, polyoxyethylene octylphenol ethers, ethoxylated isooctylphenol, octylphenol, nonylphenol, alkylphenol polyglycol ethers, tributylphenyl polyglycol ethers, tristearylphenyl polyglycol ethers, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignosulfite waste liquors and methylcellulose.

According to an embodiment, examples of suitable carriers are mineral earths such as silica gels, silicates, talc, kaolin, attaclay, attapulgite, limestone, lime, chalk, bole, loess, clay, dolomite, diatomaceous earth, calcium sulfate, magnesium sulfate, magnesium oxide, ground synthetic materials, fertilizers, such as, for example, ammonium sulfate, ammonium phosphate, ammonium nitrate, ureas, and products of vegetable origin, such as cereal meal, tree bark meal, wood meal and nutshell meal, cellulose powders, polyvinylpyrrolidone and other solid carriers.).

Suitable preservatives are for example 1,2-benzisothiazolin-3-one and/or 2-Methyl-2H-isothiazol-3-one or sodium benzoate or benzoic acid.

In an embodiment, the insecticidal composition of the present disclosure may be tank mixed with agrochemically suitable excipients and applied at a locus where one or more crop is growing, or may be alternatively mixed with water, and then applied.

In an embodiment, the insecticidal compositions may be applied in a diluted or an undiluted form. The insecticidal compositions may also be applied as a ready-to-use product.

In an embodiment, deltamethrin is present in the composition in an amount ranging from about 0.1 to 99 % by weight, more preferably from 0.5 to 50 % by weight. In an embodiment, deltamethrin is present in the composition in an amount ranging from about 0.5 to 40 % by weight. In an embodiment, deltamethrin is present in the composition in an amount ranging from about 0.5 to 30 % by weight. In an embodiment, deltamethrin is present in the composition in an amount ranging from about 0.5 to 20 % by weight. In an embodiment, deltamethrin is present in the composition in an amount ranging from about 0.5 to 10 % by weight. In an embodiment, deltamethrin is present in the composition in an amount ranging from about 0.5 to 5 % by weight. In an embodiment, deltamethrin is present in the composition in an amount ranging from about 2.5 % by weight.

In an embodiment, deltamethrin concentrations in ready-to-use formulations, which may be obtained after two-to-tenfold dilution, are preferably from 0.1 to 99 % by weight, more preferably from 0.5 to 50 % by weight.

In a yet another embodiment, the insecticidal composition comprising deltamethrin is applied in pesticidally effective amounts.

In an embodiment, the insecticidal composition may be applied at a rate of 1 kg or l/ha to 1000 kg or l/ha. In an embodiment, the insecticidal composition may be applied at a rate of 50 kg or l/ha to 900 kg or l/ha. In an embodiment, the insecticidal composition may be applied at a rate of 100 kg or l/ha to 800 kg or l/ha. In an embodiment, the insecticidal composition may be applied at a rate of 150 kg or l/ha to 700 kg or l/ha. In an embodiment, the insecticidal composition may be applied at a rate of 200 kg or l/ha to 600 kg or l/ha. In an embodiment, the insecticidal composition may be applied at a rate of 250 kg or l/ha to 500 kg or l/ha. In an embodiment, the insecticidal composition may be applied at a rate of 400 kg or l/ha.

In an embodiment, the insecticidal compositions may be used for foliar application, ground application, or application to plant propagation materials.

In an embodiment, the insecticidal formulations of the present disclosure may typically be produced by mixing deltamethrin with an inert carrier or adding surfactants or other adjuvants and carriers as needed and formulated into solid, or liquid formulations, including but not limited to wettable powders, granules, water dispersible granules, dry flowables, dusts, soluble (liquid) concentrates, suspension concentrates (SC) , oil in water emulsions, water in oil emulsions, emulsifiable concentrates (EC), emulsions in water (EW), capsule suspensions (CS), ZC formulations, oil dispersions, FS formulations for seed treatment and other known formulation types. In a preferred embodiment, an EW composition of deltamethrin is applied.

In a further aspect, provided is a method of controlling and/or preventing infestation of *Mayetiola destructor* at a target locus comprising applying to the target locus an insecticidal composition comprising deltamethrin.

In a further aspect, provided is a method of controlling and/or preventing infestation of *Mayetiola destructor* in cereal crops comprising applying to a crop of cereal plants, a locus thereof, or a propagation material thereof, an insecticidal composition comprising deltamethrin.

In an embodiment, there is also provided a method of protecting plants from attack or infestation by *Mayetiola destructor* comprising contacting a plant, or soil in which the plant is growing, with an insecticidal composition comprising deltamethrin.

The disclosure also provides a method for the protection of plant propagation material, preferably seeds, and the seedlings' roots and shoots from *Mayetiola destructor* which comprises contacting the plant propagation material, for example, as the seeds before sowing and/or after pregermination with an insecticidal composition of present disclosure.

In an embodiment, the method comprises the use of the insecticidal compositions of the disclosure, including those prepared by premixing prior to application, e.g. as a ready mix or tank mix formulation.

The insecticidal composition of the disclosure may be applied by any of the known means of applying pesticidal compounds. For example, it may be applied, formulated or unformulated, to the pests or to a locus of the pests (such as a habitat of the pests, or a growing plant liable to infestation by the pests) or to any part of the plant, including the foliage, stems, branches or roots, to the seed before it is planted or to other media in which plants are growing or are to be planted (such as soil surrounding the roots, the soil generally, paddy water or hydroponic culture systems), directly or it may be sprayed on, dusted on, applied by dipping, applied as a cream or paste formulation, applied as a vapor or applied through distribution or incorporation of a composition (such as a granular composition or a composition packed in a water-soluble bag) in soil or an aqueous environment.

The insecticidal compositions of this disclosure may contain other compounds having biological activity, for example micronutrients or compounds having plant growth regulating, herbicidal, fungicidal, insecticidal, nematicidal or acaricidal activity.

The insecticidal compositions may further comprise one or more additional active ingredients such as an insecticide, an acaricide, a fungicide, a synergist, an herbicide, a biological agent, a plant or seaweed extract or a plant growth regulator.

The insecticidal compositions of the present invention may be applied in conjunction with one or more additional active ingredients such as an insecticide, an acaricide, a fungicide, a synergist, a herbicide, a biological agent, a plant or seaweed extract or a plant growth regulator. The insecticidal compositions may be premixed with the additional active ingredients before application or tank-mixed with the additional active ingredients before or at the time of application. Alternatively, they may be applied in a sequential manner to the target locus.

The application can be carried out both before and after the infestation of the crops, plants, plant propagation materials, such as seeds, soil, or the area, material or environment by the *Mayetiola destructor* pests.

Suitable application methods include inter alia soil treatment, seed treatment, in furrow application, and foliar application. Soil treatment methods include drenching the soil, drip irrigation (drip application onto the soil), dipping roots, tubers or bulbs, or soil injection. Seed treatment techniques include seed dressing, seed coating, seed dusting, seed soaking, and seed pelleting. In furrow applications typically include the steps of making a furrow in cultivated land, seeding the furrow with seeds, applying the composition to the furrow, and closing the furrow. Foliar application refers to the application of the composition to plant foliage, e.g. through spray equipment. For foliar applications, it can be advantageous to modify the behaviour of the pests by use of pheromones in combination with the compounds of the present invention. Suitable pheromones for specific crops and pests are known to a skilled person.

In an embodiment, for use in treating crop plants, e.g., by foliar application, the rate of application of the insecticidal composition of this disclosure may be in the range of 1 to 1000 kg or litre per hectare.

As used herein, the term "contacting" includes both direct contact (applying the compositions directly on the animal pest or plant - typically to the foliage, stem or roots of the plant) and indirect contact (applying the active compounds/compositions to the locus, i.e. habitat, breeding ground, plant, seed, soil, area, material or environment in which a pest is growing or may grow, of the animal pest or plant).

As used herein, the term "target locus" refers to an area, a plant or a part thereof, a crop or a part thereof which is infested by or prone to infestation by *Mayetiola destructor.* It includes any habitat, breeding ground, plant, plant propagation material, soil, area, material or environment in which a crop is growing or may grow, or where the pest breeds, attacks, may breed or may attack.

The term "crop" refers to both, growing and harvested crops.

The term "plant" includes cereals, e.g. durum and other wheat, rye, barley, triticale, oats, rice, or maize (fodder maize and sugar maize / sweet and field corn); beet, e.g. sugar beet or fodder beet; fruits, such as pomes, stone fruits or soft fruits, e.g. apples, pears, plums, peaches, nectarines, almonds, cherries, papayas, strawberries, raspberries, blackberries or gooseberries; leguminous plants, such as beans, lentils, peas, alfalfa or soybeans; oil plants, such as rapeseed (oilseed rape), turnip rape, mustard, olives, sunflowers, coconut, cocoa beans, castor oil plants, oil palms, ground nuts or soybeans; cucurbits, such as squashes, pumpkins, cucumber or melons; fiber plants, such as cotton, flax, hemp or jute; citrus fruit, such as oranges, lemons, grapefruits or mandarins; vegetables, such as eggplant, spinach, lettuce (e.g. iceberg lettuce), chicory, cabbage, asparagus, cabbages, carrots, onions, garlic, leeks, tomatoes, potatoes, cucurbits or sweet peppers; lauraceous plants, such as avocados, cinnamon or camphor; energy and raw material plants, such as corn, soybean, rapeseed, sugar cane or oil palm; tobacco; nuts, e.g. walnuts; pistachios; coffee; tea; bananas; vines (table grapes and grape juice grape vines); hop; sweet leaf; natural rubber plants or ornamental and forestry plants, such as flowers (e.g. carnation, petunias, geranium/pelargoniums, pansies and impatiens), shrubs, broad-leaved trees (e.g. poplar) or evergreens, e.g. conifers; eucalyptus; turf; lawn; grass such as grass for animal feed or ornamental uses. Preferred plants include potatoes sugar beets, tobacco, wheat, rye, barley, oats, rice, corn, cotton, soybeans, rapeseed, legumes, sunflowers, coffee or sugar cane; fruits; vines; ornamentals; and vegetables, such as cucumbers, tomatoes, beans and squashes.

The term "plant" is to be understood as including plants which have been modified by either conventional breeding, or mutagenesis or genetic engineering, or by a combination thereof.

The term "cereal" refers to any grass cultivated (grown) for the edible components of its grain (botanically, a type of fruit called a caryopsis), composed of the endosperm, germ, and bran. The term may also refer to the resulting grain itself. Some non-limiting examples of cereals are rice, wheat, millet, rye, sorghum, triticale, maize, oats, barley, fonio, quinoa, etc.

The term "plant propagation material" refers to all the generative parts of the plant such as seeds and vegetative plant material such as cuttings and tubers (e.g. potatoes), which can be used for the multiplication of the plant. This includes seeds, roots, fruits, tubers, bulbs, rhizomes, shoots, sprouts and other parts of plants. Seedlings and young plants, which are to be transplanted after germination or after emergence from soil, may also be included. These plant propagation materials may be treated prophylactically with a plant protection compound either at or before planting or transplanting.

The term "seed" include seeds and plant propagules of all kinds including, but not limited to, true seeds, seed pieces, suckers, corms, bulbs, fruit, tubers, grains, cuttings, cut shoots and the like, and means in a preferred embodiment true seeds.

In general, "pesticidally effective amount" means the amount of the insecticidal composition comprising deltamethrin needed to achieve an observable effect on growth, including the effects of necrosis, death, retardation, prevention, and removal, destruction, or otherwise diminishing the occurrence and activity of the target organism. Particularly, the present insecticidal composition of this disclosure is highly effective when applied at a dose of 1 g or ml/ha to 1000 g or ml/ha.

The invention will now be described in more details with reference to the following examples. While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above-described embodiment, method, and following examples, but by all embodiments and methods within the scope and spirit of the invention.

### Examples

### Example 1: Efficacy of deltamethrin against Mayetiola destructor larvae in wheat

Deltamethrin 2.5% EW formulation was applied on wheat for control of *Mayetiola destructor.* The trial was conducted in 4 replicates.
Plot size: 2 by 2.5 metres (5m²)
Dose rate of deltamethrin: 0.5 l/ha (500 ml/ha)
Application rate of composition: 400 L/ha
Application type: 2 foliar applications 7 days apart

Efficacy of deltamethrin was checked on 7 and 14 days after the second application.

**Table 1: Demonstrates percent control of M. destructor larvae in wheat crop by deltamethrin 2.5% EW.**

| Treatment | % Control of *M. destructor* larvae | |
|---|---|---|
| | 7 days after second application | 14 days after second application |
| Untreated | 0 | 0 |
| Deltamethrin | 93 | 98 |

**Table 2: Demonstrates percent control of M. destructor infestation in wheat crop by deltamethrin 2.5% EW.**

| Treatment | % Control of *M. destructor* infestation | |
|---|---|---|
| | 7 days after second application | 14 days after second application |
| Untreated | 0 | 0 |
| Deltamethrin | 92 | 98 |

From the above example, it is evident that deltamethrin proved effective in controlling the *M. destructor* larvae and overall infestation of wheat crop.

## Claims

1. A method of controlling *Mayetiola destructor* comprising contacting *Mayetiola destructor* with deltamethrin or a composition comprising deltamethrin.

2. The method as claimed in claim 1, wherein the method comprises applying deltamethrin at a rate of 1 g or ml/ha to 1000 g or ml/ha to a target locus.

3. The method as claimed in claim 1, wherein deltamethrin prevents or controls damage by *Mayetiola destructor* to a target locus to which deltamethrin or a composition comprising deltamethrin is applied.

4. The method as claimed in claim 3, wherein the target locus is a crop or a part thereof.

5. The method as claimed in claim 4, wherein the crop is a cereal crop.

6. A composition comprising deltamethrin for prevention or control of *Mayetiola destructor.*

7. The composition as claimed in claim 6, wherein deltamethrin is present in the composition in an amount ranging from about 0.1 to 99 % by weight, more preferably from 0.5 to 50 % by weight.

8. The composition as claimed in claim 6, wherein the composition further comprises one or more agrochemically suitable excipients.

9. The composition as claimed in claim 6, wherein the composition is formulated as a solid or a liquid formulation.

10. The composition as claimed in claim 6, wherein the composition is formulated as a wettable powder, a granule, a water dispersible granule, a dry flowable, dusts, a soluble (liquid) concentrate, a suspension concentrate (SC), an oil in water emulsion, a water in oil emulsion, an emulsifiable concentrate (EC), an emulsion in water (EW), a capsule suspension (CS), a ZC formulation, an oil dispersion, or an FS formulation for seed treatment.

11. The composition as claimed in claim 6, wherein the composition is applied to a target locus at a rate of 1 kg or l/ha to 1000 kg or l/ha.

12. The composition as claimed in claim 6, wherein the composition prevents attack or infestation and damage to the target locus to which it is applied.

13. The composition as claimed in claim 6, wherein the composition is used for foliar application, ground application, or application to plant propagation materials.

14. A method for the protection of plant propagation material, preferably seeds, and the seedlings' roots and shoots from *Mayetiola destructor* which comprises contacting the plant propagation material with the composition of claim 6.

15. A method of controlling and/or preventing infestation of *Mayetiola destructor* in cereal crops or protecting plants from attack or infestation by *Mayetiola destructor* in cereal crops comprises contacting a cereal crop plant or a part thereof, or soil in which said cereal crop plant is growing, with the composition of claim 6.
